# EUROPEAN PATENT APPLICATION

(11) **EP 4 653 074 A1**
(43) Date of publication of application: **26.11.2025**
(21) Application number: 25163873.0
(22) Date of filing: 14.03.2025
(51) Int. Cl.: B01D 53/04, B01D 53/06

(54) **ORGANIC SOLVENT RECOVERY SYSTEM USING AN INERT GAS CLOSED LOOP STREAM**

(30) Priority: 22.03.2024 US 202418613366
(71) Applicant: Durr Systems, Inc., Southfield, Michigan 48022 (US)
(72) Inventor: Kukreja, Ankit, DePere, 54115 (US); Schroeder, Jason T., DePere, 54115 (US)
(74) Representative: Uexküll & Stolberg

(57) **Abstract**

Contaminant recovery system and method for purifying a process gas containing at least one adsorbable contaminant. A first rotary concentrator has an adsorption zone having at least one filter element for adsorbing at least one adsorbable contamination from a process gas containing the at least one adsorbable contamination, and a desorption zone. An inert desorption carrier gas closed loop stream is in fluid communication with the desorption zone, a condenser, and a heat source for heating the carrier gas to a temperature effective for desorbing the at least one adsorbable contamination in the desorption zone. A second rotary concentrator may be included downstream of the first rotary concentrator.

## Description

This application claims priority of U.S. Patent Application Serial No. 18/613,366 filed March 22, 2024, the disclosure of which is incorporated herein by reference in its entirety.

### BACKGROUND

Embodiments disclosed herein relate to contamination recovery systems especially for use in purifying industrial process exhaust. In certain embodiments, the systems enable the efficient separation of a contamination from a gas to be treated containing a contamination and recover the separated contamination using an inert carrier gas.

VOC's ("Volatile Organic Compounds" which are for example organic solvents, or hydrocarbons like alkanes, alkenes, alkynes, exygenated hydrocarbons, and halogenated hydrocarbons, etc.) generated from industrial processes or released by industrial processes (e.g., automotive paint booths, spray coating operations, semiconductor fabrication, exhaust air from biogas or waste incineration plants, air from printing plants or plastics processing plants, air from mine gas, etc.) are an example of a contamination that must be abated to reduce pollution, often in accordance with government regulations. However, doing so in a cost-effective manner can be difficult. Conventional VOC abatement methodologies may use an adsorbent to adsorb (and then be regenerated by desorption) an organic solvent in a gas to be treated containing an organic solvent, and the organic solvent is moved from the gas to be treated to a carrier gas to purify the gas to be treated. For example, an adsorption/desorption treatment may alternately contact a gas to be treated containing an organic solvent with an adsorbent, followed by desorbing with the aid of a carrier gas. Organic solvent remaining in the carrier gas stream may be destroyed downstream such as with an oxidizer.

However, difficulties with conventional systems include problems with completely separating the organic solvent from the carrier gas in a condensing recovery device, insufficient regeneration of the adsorbent, poor recovery of the organic solvent, etc.

In addition, in some conventional systems, the adsorption/desorption is carried out alternately, e.g., the contamination is adsorbed by the introduction of process gas to be treated into a first chamber, followed by desorption of the contamination by the introduction into a second chamber of a carrier gas. Valving is then actuated, whereby the first chamber becomes the desorption chamber and the second chamber becomes the adsorption chamber. However, the first chamber volume, which is full of air during adsorption, should be purged when it switches from the adsorption to the desorption mode. For example, at Time T1, the medium through a first chamber A is air (adsorption) and medium through a second chamber B is inert gas (desorption). When the modes switch at time T2 with chamber A in desorption mode and chamber B in adsorption mode, the chamber A is completely filled with air. If a concentrated desorption stream above 25% LEL (Lower explosive limit) is supplied through that chamber, it can potentially cause a fire. Although the inert carrier gas will eventually displace the chamber A volume, the transition period from complete air to complete inert gas in chamber A is potentially unsafe since it exceeds the VOC concentration limits.

It is therefore an object of embodiments disclosed herein to provide an improved adsorbable contamination recovery apparatus, system and method of adsorbable contaminant recovery, and an apparatus, system and method of reducing or eliminating contaminations such as VOCs that do not suffer from drawbacks of the prior art would be highly beneficial.

### SUMMARY

Problems of the prior art have been addressed by embodiments disclosed herein, which provide a pollution control apparatus, system and method for overcoming the limitations of the prior art in an innovative and useful way. In certain embodiments, the apparatus or system includes a separating device comprising one or more rotary wheel or carousel adsorbable contamination (e.g., organic solvents such as VOC's) concentrators, and/or one or more rotary disc adsorbable contamination concentrators, in fluid communication with or configured to be in fluid communication with process exhaust gas to be treated. In certain embodiments, the one or more concentrators include a continuous rotor that is configured to allow any air in an adsorption zone moving to a desorption zone to quickly be displaced with an inert gas (e.g., nitrogen), thereby minimizing potential unsafe conditions that might otherwise occur due to the amount of air in the zone.

In certain embodiments, a desorption carrier gas closed loop stream is in fluid communication with the desorption zone of a concentrator for desorbing at least one adsorbable contamination adsorbed in the adsorption zone. In certain embodiments, the desorption carrier gas closed loop stream is also in fluid communication with a condenser for condensing at least one adsorbable contamination carried in the stream. In certain embodiments, a decanter is in fluid communication with the condenser for enhancing efficient solvent recovery. The resulting less-concentrated stream at the condenser outlet may be recycled back to a concentrator, optionally after suitable heat exchange. Recovered solvent from the condenser (or decanter downstream of the condenser) may be subject to dehydration, such as via distillation, and optionally may be re-used or repurposed. The condenser may include a demister pad to enhance the removal of liquid droplets, for example.

In certain embodiments, the apparatus and system are particularly applicable to treatment of high volume, low VOC concentration process gases.

In certain embodiments, the one or more rotary concentrators continuously rotate during operation. In certain embodiments, the one or more concentrators include multiple zones, including one or more adsorption zones and one or more desorption zones, the latter being where the at least one contamination is driven off the adsorbent material in the rotary member (e.g., is desorbed) and sent to a downstream unit operation, such as a second concentrator arranged in series. Thus, the one or more concentrators act as a capture device, capturing the at least one contamination for subsequent desorption and downstream treatment.

In certain embodiments, the system includes two or more concentrators (e.g., double-stage) arranged in series, with concentrated gas from a first concentrator flowing to a second concentrator for further adsorbable contamination separation. In certain embodiments of a double-stage system, each concentrator has a dedicated desorption carrier gas closed loop stream. In certain embodiments, the carrier gas is an inert gas such as nitrogen. In certain embodiments both such streams may be in fluid communication with a dedicated condenser/demister, or in some embodiments a single condenser/demister can be configured to receive concentrated gas from only the downstream concentrator. A decanter in fluid communication with each condenser may be provided to aid in solvent recovery particularly where the contaminant is an organic solvent, such as a VOC.

In double-stage systems, the choice of the type of concentrator at each stage depends in part on flow rates. Carousel type devices are typically used for higher flow rates. Accordingly, since stage 1 flow (the flow into the first or initial concentrator) is typically higher flow compared to stage 2, a carousel rotary concentrator is preferred as the first or initial concentrator, since typically it handles higher flow. Those skilled in the art will appreciate that this does not preclude use of a disk rotary concentrator at stage 1 where the flow rate is appropriate, or the use of a carousel rotary concentrator at stage 2, where the flow rate is appropriate. Thus, depending at least on part on flow rates, any combination of carousel and disk rotary concentrators may be used.

In certain embodiments the desorption carrier gas (e.g., an inert gas such as nitrogen) closed loop is a closed loop stream isolated (decoupled) from the adsorption air, which allows for much higher VOC concentration ratios (exceeding 25% LEL) while complying with safety and emission regulations. The closed loop includes a heat source for raising the temperature of the carrier gas in the stream to a temperature effective (e.g., 428°F) for desorbing the adsorbable contamination from the adsorption media in the concentrator.

The resulting contamination recovery system, particularly where the contamination is an organic solvent, achieves efficient solvent recovery and minimizes or eliminates the need for downstream thermal oxidation, such as with RTO's or RCO's, etc. It provides for a reduced carbon footprint due to efficient VOC recovery.

Accordingly, in certain embodiments, disclosed is a contamination recovery system for purifying a process gas containing at least one adsorbable contamination, comprising:
a first rotary concentrator comprising an adsorption zone having at least one filter element for adsorbing the at least one adsorbable contaminant from a process gas containing at least one adsorbable contaminant; a desorption zone; a process gas inlet for introduction of the process gas into the first rotary concentrator; a purified gas outlet for venting purified gas from the first rotary concentrator; a desorption carrier gas inlet for receiving a desorption carrier gas in the desorption zone for desorbing at least one adsorbable contaminant adsorbed by the at least one filter element; and a desorption carrier gas outlet; and a desorption carrier gas closed loop stream in fluid communication with the desorption zone via the desorption zone inlet and in fluid communication with a condenser and with a heat source for heating carrier gas in the stream to a temperature effective for desorbing the at least one adsorbable contaminant in the desorption zone.

In certain embodiments, the at least one adsorbable contaminant is or includes an organic solvent. In certain embodiments, the at least one adsorbable contaminant is or includes a VOC.

In certain embodiments, the desorption carrier gas is an inert gas.

In certain embodiments, the contamination recovery system further comprises a second rotary concentrator upstream of the first rotary concentrator, whereby at least a first portion of concentrated gas exiting the second rotary concentrator is introduced into the process gas inlet of the first rotary concentrator.

In certain embodiments, a second portion of concentrated gas from the second rotary concentrator is directed to atmosphere or to a downstream unit operation.

In certain embodiments, the contamination recovery system further comprises a second desorption carrier gas closed loop stream in fluid communication with the second concentrator, the second desorption carrier gas closed loop stream being in fluid communication with a second heat source for heating carrier gas in the second desorption carrier gas closed loop stream to a temperature effective for desorbing the adsorbable contaminant in the second rotary concentrator.

In certain embodiments, the condenser comprises a condenser outlet for at least one condensed contaminant, such as for condensed organic solvent.

In certain embodiments, the condenser outlet is in fluid communication with a decanter.

In certain embodiments, the contamination recovery system further comprises a source of nitrogen make-up gas in fluid communication with the desorption carrier gas closed loop stream.

In certain embodiments, the condenser further comprises a demister.

In certain embodiments, the desorption carrier gas closed loop stream is in fluid communication with a heat exchanger.

In certain embodiments, the first rotary concentrator is a disk rotary concentrator and the second rotary concentrator is a carousel rotary concentrator.

In certain embodiments, the first rotary concentrator is a carousel rotary concentrator and the second rotary concentrator is a disk rotary concentrator.

In certain embodiments, each of the first and second rotary concentrators are disk rotary concentrators.

In certain embodiments, each of the first and second rotary concentrators are carousel rotary concentrators.

In certain embodiments, the contamination recovery system further comprises a distillation column in fluid communication with a decanter.

In certain embodiments, disclosed is a method of recovering at least one adsorbable contaminant from a process gas containing at least one adsorbable contaminant, comprising: introducing the process gas into a first rotary concentrator having an adsorption zone and a desorption zone; adsorbing the at least one adsorbable contaminant contained in the process gas in the adsorption zone; introducing an inert carrier gas into the desorption zone and desorbing the adsorbed at least one adsorbable contaminant with the inert carrier gas; condensing the at least one adsorbable contaminant in the inert carrier gas in a condenser; heating the inert carrier gas exiting the condenser to a temperature effective for desorbing the at least one adsorbable contaminant in the rotary concentrator and recirculating the heated inert carrier gas to the desorption zone, whereby the inert carrier gas is contained in a closed loop stream; and exhausting purified gas from the first rotary concentrator.

In certain embodiments, the process gas introduced into the first rotary concentrator is first introduced into a second rotary concentrator (e.g., upstream of the first rotary concentrator).

In certain embodiments, the method further comprises introducing a second desorption carrier gas into a second desorption zone of the second rotary concentrator and desorbing at least one adsorbed contaminant in the second desorption zone with the second desorption inert carrier gas.

In certain embodiments, the method further comprises condensing at least one adsorbable contaminant contained in the second inert carrier gas in a condenser.

In certain embodiments, where the at least one adsorbable contaminant includes or is an organic solvent, the method further comprises decanting organic solvent condensed by the condenser.

In certain embodiments, the method further comprises heating the inert carrier gas to a temperature effective for desorbing the at least one adsorbable contaminant in the desorption zone.

### BRIEF DESCRIPTION OF THE DRAWINGS

The embodiments disclosed herein may take form in various components and arrangements of components, and in various process operations and arrangements of process operations. The drawings are only for purposes of illustrating preferred embodiments and are not to be construed as limiting. In the drawings, like numerals indicate like parts. This disclosure includes the following drawings:
FIG. 1 is a first perspective view of a contamination recovery apparatus in accordance with certain embodiments;
FIG. 2 is a second perspective view of a contamination recovery apparatus in accordance with certain embodiments;
FIG. 3A is a schematic diagram of a contamination recovery process in accordance with certain embodiments;
FIG. 3B is a schematic diagram of a contamination recovery process similar to FIG. 3A;
FIG. 3C is a schematic diagram of a contamination recovery process similar to FIG. 3A with the addition of a heat exchanger;
FIGS. 4A and 4B are another schematic diagram of a contamination recovery process in accordance with certain embodiments;
FIGS. 5A, 5B and 5C are a still further schematic diagram of a contamination recovery process in accordance with certain embodiments; and
FIGS. 6A and 6B are yet another schematic diagram of a contamination recovery process in accordance with certain embodiments.

### DETAILED DESCRIPTION

A more complete understanding of the components, processes and apparatuses disclosed herein can be obtained by reference to the accompanying drawings. The figures are merely schematic representations based on convenience and the ease of demonstrating the present disclosure, and is, therefore, not intended to indicate relative size and dimensions of the devices or components thereof and/or to define or limit the scope of the exemplary embodiments.

Although specific terms are used in the following description for the sake of clarity, these terms are intended to refer only to the particular structure of the embodiments selected for illustration in the drawing, and are not intended to define or limit the scope of the disclosure. In the drawing and the following description below, it is to be understood that like numeric designations refer to components of like function.

The singular forms "a," "an," and "the" include plural referents unless the context clearly dictates otherwise.

As used in the specification, various devices and parts may be described as "comprising" other components. The terms "comprise(s) ," "include(s)," "having," "has," "can," "contain(s)," and variants thereof, as used herein, are intended to be openended transitional phrases, terms, or words that do not preclude the possibility of additional components.

All ranges disclosed herein are inclusive of the recited endpoint and independently combinable (for example, the range of "from 2 inches to 10 inches" is inclusive of the endpoints, 2 inches and 10 inches, and all the intermediate values).

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. The modifier "about" should also be considered as disclosing the range defined by the absolute values of the two endpoints. For example, the expression "from about 2 to about 4" also discloses the range "from 2 to 4."

It should be noted that many of the terms used herein are relative terms. For example, the terms "upper" and "lower" are relative to each other in location, i.e. an upper component is located at a higher elevation than a lower component, and should not be construed as requiring a particular orientation or location of the structure. As a further example, the terms "interior", "exterior", "inward", and "outward" are relative to a center, and should not be construed as requiring a particular orientation or location of the structure.

The terms "top" and "bottom" are relative to an absolute reference, i.e. the surface of the earth. Put another way, a top location is always located at a higher elevation than a bottom location, toward the surface of the earth.

The terms "horizontal" and "vertical" are used to indicate direction relative to an absolute reference, i.e. ground level. However, these terms should not be construed to require structures to be absolutely parallel or absolutely perpendicular to each other.

The term "adsorbable contamination" or "contaminant" as used herein includes impurities or contaminants such as oxidizable pollutants, volatile organic components (VOCs), including organic compounds having an initial boiling point less than or equal to 250°C at standard atmospheric pressure, organic solvents (as a preferred application) including hydrocarbons such as benzene, toluene, xylenes, etc.; gaseous (e.g., methane, carbon dioxide, etc.), particulate and/or liquid (such as droplets) matter capable of being adsorbed on (and desorbed from) a rotary concentrator, etc. in accordance with embodiments disclosed herein. In a particular preferred embodiment, the adsorbable contamination or contaminant is a condensable organic solvent.

In certain embodiments, a suitable separating device is disclosed in U.S. Patent No. 11,071,941, and its functionality, operation and applicability of in-kind devices are known in the art and are disclosed in, for example, U.S. Pub. No. 2017/0266606, U.S Patent Nos. 11,358,097, 8,628,608, 5,788,744 and 5,693,123, the disclosures of which are hereby incorporated by reference. Suitable separating devices include carousel-type rotary devices and disc-type rotary devices, such as those commercially available from Durr Group and sold under the SORPT.X^{™} line of concentrators. For example, in the rotary devices, adsorbent media (e.g., zeolite, activated carbon etc.), such as adsorbent filter blocks, rotate about an axis. In an adsorbent portion of the rotational cycle, contaminated process gas passes over or through the adsorbent media and the contaminants (e.g., organic solvent(s)) are adsorbed by the media. In another portion of the rotational cycle, the adsorbed contaminants are desorbed from the media such as by exposure to a gas stream at an elevated temperature effective for desorbing the contaminants from the media (e.g., 380 to 428 °F for zeolite, lower for carbon media) . This gas stream, having passed through the media and now containing contaminants, is relatively smaller in volume than the inlet contaminated process gas stream, thus concentrating the impurities. A portion of this stream may be sent to a downstream unit operation for further processing, and another portion may be recirculated back to the concentrator. A suitable downstream unit operation includes one or more of a condenser, a decanter and a demister. The desorption zone typically includes a cooling zone. Typically the desorption zone (including the cooling zone) is smaller in volume than the adsorption zone.

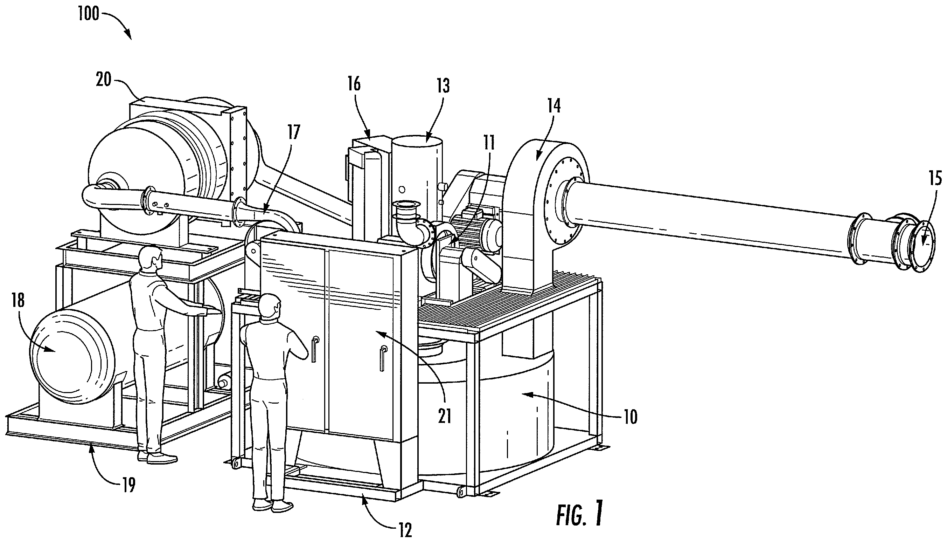

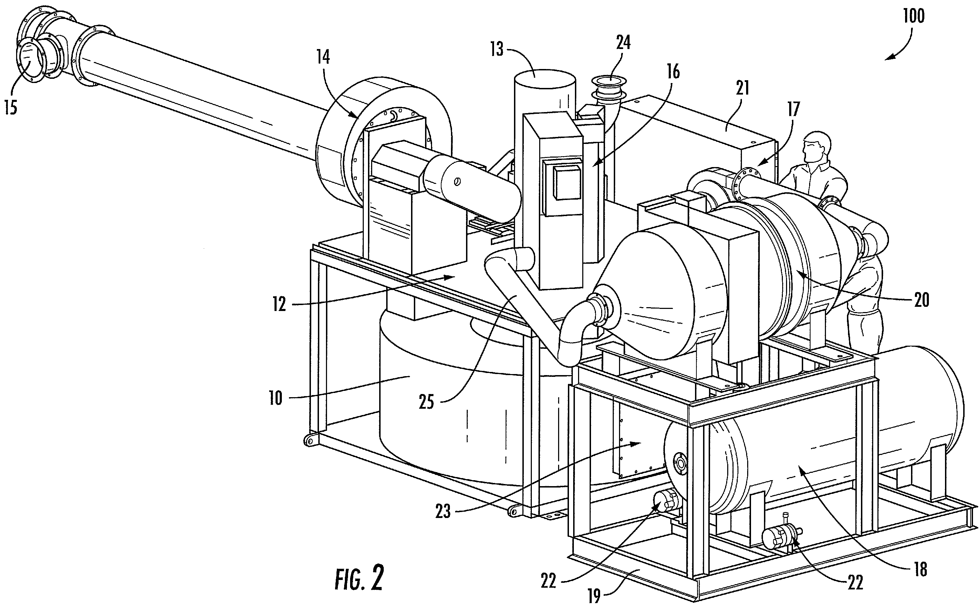

Turning now to FIGS. 1 and 2, there is shown suitable contamination recovery apparatus 100 in accordance with certain embodiments. In the embodiment shown, a concentrator skid 12 supports concentrator 10 and ancillary equipment, including cooling fan 11; exhaust stack 13; adsorption fan 14 in fluid communication with process exhaust inlet 15; desorption heater 16; cooling outlet flow line 24 (FIG. 2); and desorption fan 17 in fluid communication with condenser 20 which is supported on condenser skid 18. In the embodiment shown, condenser skid 19 also supports decanter 18 and pumps 22 (FIG. 2). Cabinet 21 may be provided to house various components including controls (e.g., PLC/HMI, drives, user interface(s), etc.). The housing for the condenser 10 may include one or more access doors 23 such as for seal repair and filter block replacement. A carrier gas (e.g., nitrogen) feed line 25 is seen in FIG. 2 for system start-up and carrier gas make-up. Those skilled in the art will appreciate that other arrangements of the various components of the contamination recovery system may be used.

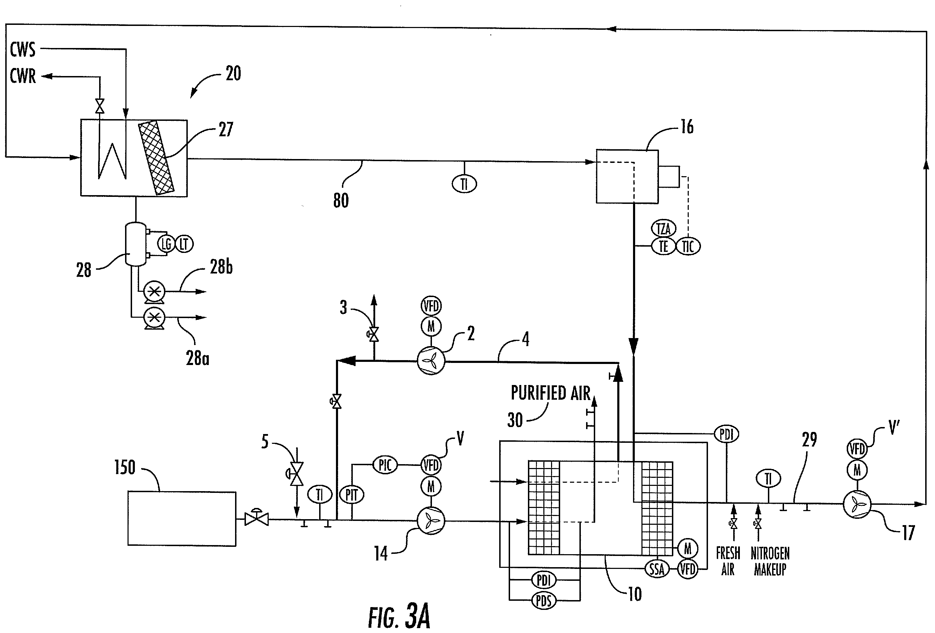

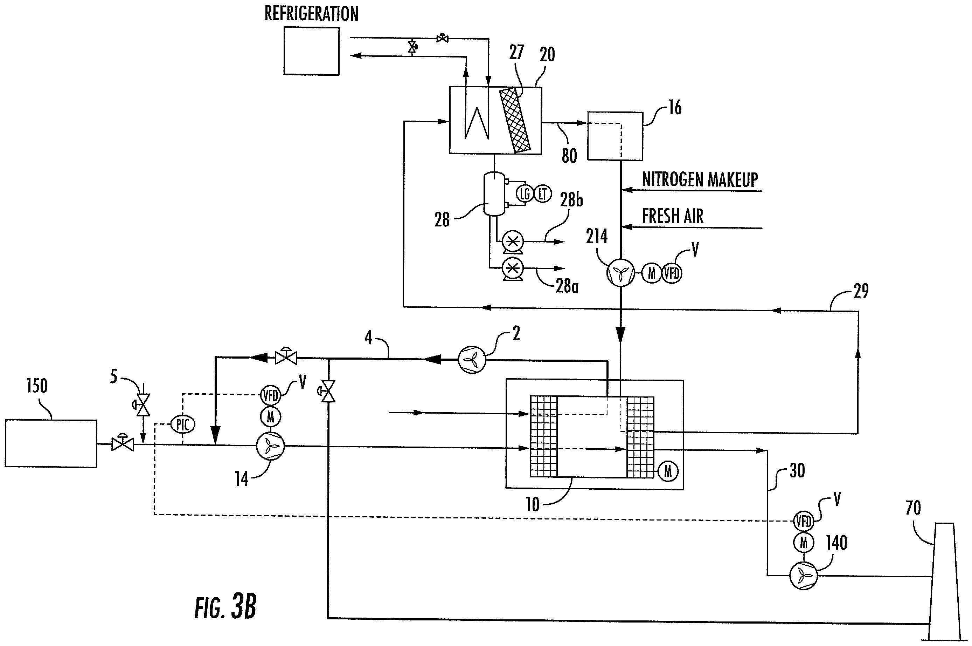

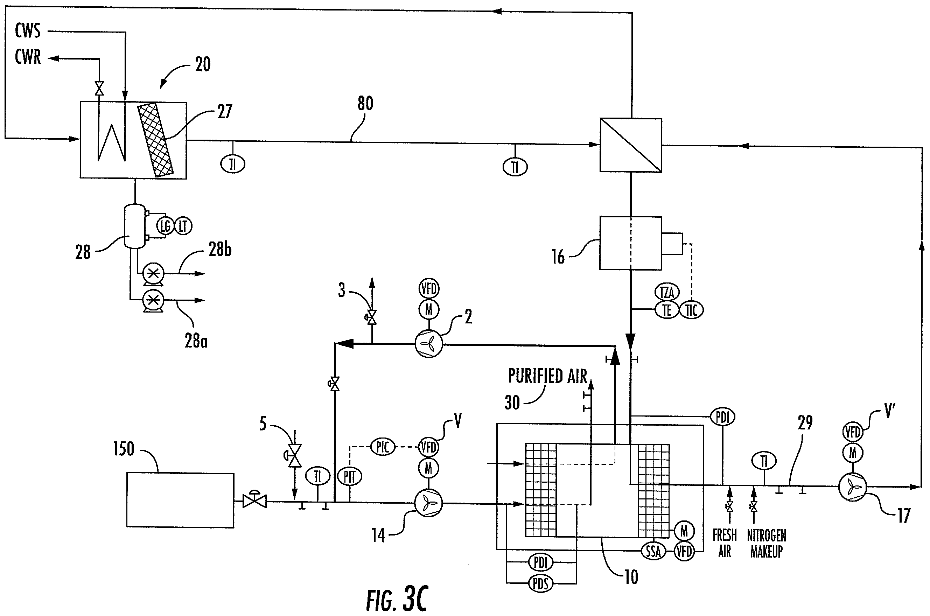

FIGS. 3A, 3B and 3C illustrate schematically a contamination (e.g., VOC) recovery processes in accordance with certain embodiments. Process exhaust 150 to be treated, such as contaminant-laden gas from an industrial process (e.g., 3500 SCFM, 70°F, 70% RH in FIG. 3A and FIG. 3B embodiments; 15,000 SCFM, 70°F, 160 lb/hr VOC, 70% RH in FIG. 3B embodiment), is introduced to concentrator 10 with the use of a driving force such as supply fan 14 driven by motor M. The motor M for the supply fan 14 may be associated with a variable frequency drive V and may be in electrical communication with a suitable processor or the like to control the fan speed, etc. Fresh air may be added to the process gas inlet stream via suitable valving 5. The process gas inlet stream may include recirculation from the concentrator via recirculation loop 4, with recirculation driven by a driving force 2 such as a cooling fan. A vent valve 3 (FIG. 3A) may be provided in recirculation loop 4 as shown.

A desorption carrier gas closed loop stream 29 communicates with a desorption zone in the concentrator 10 and communicates with a desorption heat source 16 to raise the temperature of the carrier gas in the stream to a temperature effective to desorb adsorbable contamination previously captured or adsorbed by adsorbent material (e.g., filter blocks or the like, not shown) in an adsorption zone of the concentrator 10 as is known in the art. Optionally, a heat exchanger 160 (FIG. 3C) may be associated with the closed loop stream 29 to recover heat from the concentrated gas stream exiting the concentrator 10 prior to its introduction into condenser 20, and returning that heat to the stream 80 exiting the condenser 20 prior to it being heated by the desorption heat source 16. A driving force such as desorption fan 17 (FIG. 3A), driven by motor M' having a variable frequency drive V' (which may be in electrical communication with a process for appropriate process control), may be in fluid communication with the concentrator 10, directs concentrated air from the concentrator 10 to condenser 20 via the carrier gas desorption loop 29, which includes the inert carrier gas (e.g., nitrogen). Fresh air and carrier gas (e.g., nitrogen) make-up may be added as necessary to carrier gas desorption loop 29 (FIG. 3A), such as just after the stream exists the concentrator or to the stream exiting the desorption heater 16 (FIG. 3B). The make-up carrier gas ensures a high level of nitrogen is maintained in the desorption loop 29 to compensate for lost carrier gas from this stream, such as due to leakage. The make-up may be continuous or intermittent.

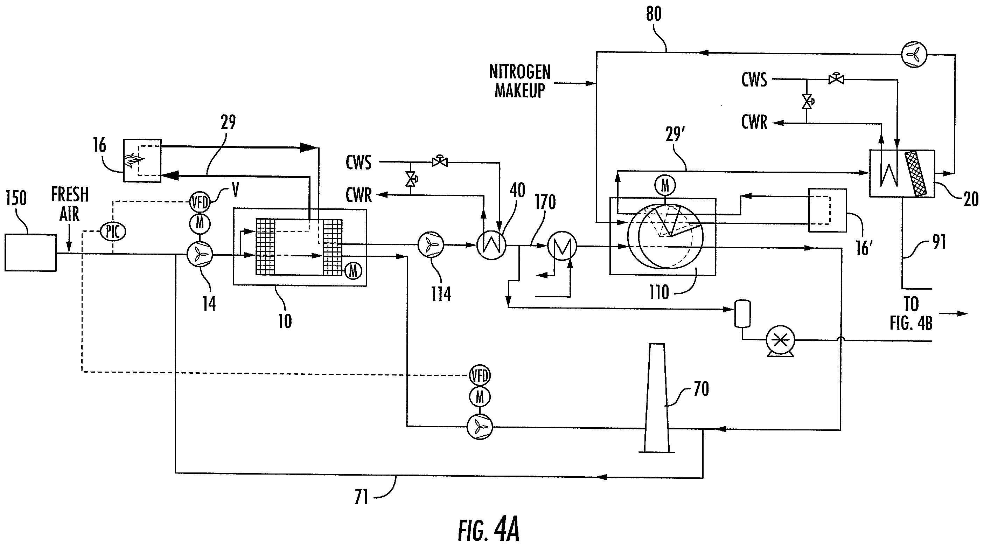

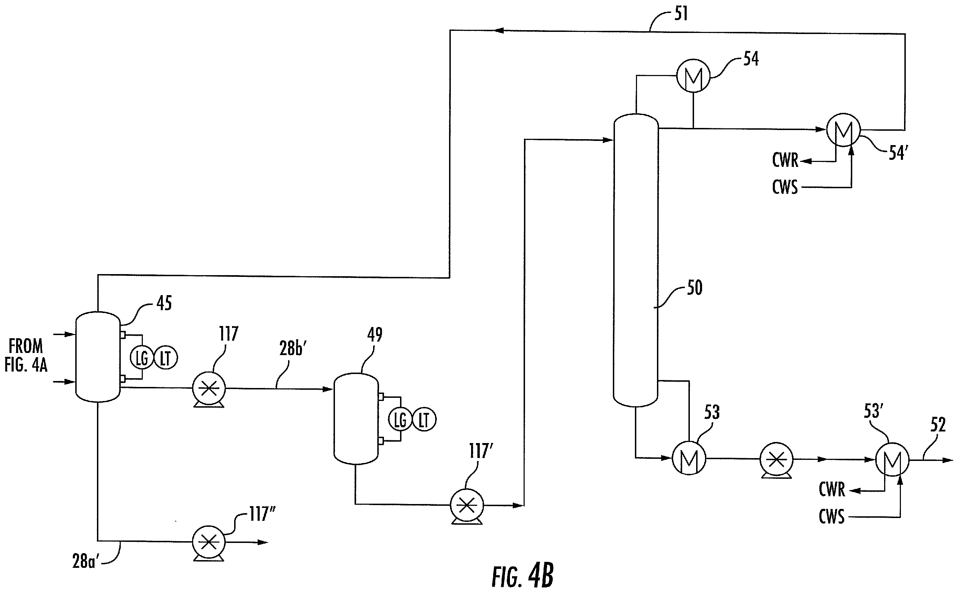

In certain embodiments, condenser 20 is in fluid communication with a chilled fluid medium source CWS (e.g., chilled water). In certain embodiments, chilled water piping may be either insulated or heat traced (e.g., temperature regulated with an electrical element above the water condensation temperature such as by using electrical heat tape that is installed on the piping, to minimize or prevent condensation or freezing of water in the piping). In certain embodiments, condenser 20 has an associated demister 27. In certain embodiments the condenser 20 communicates with decanter 28 which produces a water stream 28a and recovered solvent stream 28b as shown. The recovered solvent stream may be further processed such as via distillation (see, e.g., FIG. 4). Outflow of the condenser 20 that is not decanted is heated by the desorption heat source 16 to a temperature effective (e.g., 380-428°F) for organic solvent desorption from the adsorption media in the concentrator 10 such as by passing the heated stream through the media.

Purified air 30 exits the concentrator 10 and may be sent to an exhaust 70 with the aid of exhaust fan 140 motor M and variable frequency drive V (FIG. 3B) or to a downstream unit operation (not shown).

In operation, contaminated process exhaust 150 such as from an industrial operation is introduced with driving force 14 into rotary concentrator 10 having at least one adsorption zone and at least one desorption zone. As the contaminated process gas 150 passes over or through adsorption media in the adsorption zone, adsorbable contaminants are adsorbed by the media. Resulting purified gas 30 that is flowed through the media is vented from the concentrator 10. As the rotational cycle of the rotary concentrator continues, the media containing contaminants enters a desorption zone where hot carrier gas is passed over or through the contaminated media and desorbs the contaminants therefrom, thereby regenerating the media for subsequent adsorption of contaminants when the rotational cycle moves it back to the adsorption zone (generally after cooling). The concentrated contaminants now in the carrier gas (which now have a high solvent burden relative to the process exhaust stream 150) are introduced into condenser 20 (which may be associated with a demister 27) where the contaminants are condensed and recovered (e.g., with the aid of decanter 28 and optional distillation column) efficiently. The stream 80 (which forms part of the desorption carrier gas closed loop stream 29), now devoid of most or all of the contaminants, is introduced into the desorption heat source 16 to elevate its temperature sufficiently to be effective for desorption of contaminants into the concentrator 10, and is then circulated to the concentrator 10 such as with a suitable driving force (e.g., fan 214, driven by motor M with variable frequency drive V) FIG. 3B) for desorption in a desorption zone therein.

In accordance with certain embodiments, the carrier gas desorption loop 29 is completely decoupled from adsorption air. This allows for much higher concentration ratios (exceeding 25% LEL) while complying with safety and emission regulations. In addition, this allows for carrier gas recirculation, thus reducing carrier gas consumption. Indeed, the only carrier gas make-up generally required is due to the loss of carrier gas through leakage (e.g., concentrator 10, 110 seals). This leakage can be minimized through the use of double seals, further reducing the amount of carrier gas make-up required.

FIGS. 4A and 4B illustrate another embodiment of a contamination recovery system. In the embodiment of FIGS. 4A and 4B, a double-stage concentrator system is shown. Thus, a second concentrator 110, such as a disc-type rotary concentrator, is positioned downstream of the concentrator 10, such as a carousel-type rotary concentrator, and a portion of the concentrated air from the first concentrator 10 (e.g., the portion not sent to exhaust stack 70) is introduced into the second concentrator 110 as stream 170 via a suitable driving force such as supply fan 114. Prior to entering the second concentrator 110, the concentrated air to be sent to the concentrator 110 may be subject to condensation in chiller 40, with condensate further processed for ultimate solvent recovery such as via decanter 45 (which produces water stream 28a' and solvent stream 28b') and distillation column 50 (via feed tank 49) as shown, driven by suitable driving forces such as pumps 117, 117'. Recovered water may be pumped via pump 117" for future use. The distillation column 50 may be equipped with a suitable recycle stream 51 for recycling distillate back to the decanter 45, and the stream 51 may include suitable heat exchangers 54, 54' as shown. Dried solvent (the solvent is not completely dried because distillation is not 100% efficient) may be recovered from the distillation column at 52 such as after suitable heat exchange with heat exchanger(s) 53, 53' as shown.

As in the embodiments of FIGS. 3A, 3B and 3C, the first concentrator 10 includes a desorption carrier gas closed loop stream 29, and includes a heat source 16, such as a direct air line burner, for raising the temperature of the desorption carrier gas to a temperature effective to desorb organic solvent previously adsorbed in the adsorption zone of the concentrator 10.

In certain embodiments, the second concentrator 110 has its own dedicated desorption carrier gas closed loop stream 29' which includes a dedicated desorption heat source 16' which receives cooling air from the second concentrator 110, heats it to a temperature effective for desorbing organic solvent captured by adsorptive material in the adsorption zone of the second concentrator 110, and returns it to the concentrator 110.

In certain embodiments, condenser 20 is in fluid communication with the second concentrator 110 and is part of the desorption carrier gas closed loop stream 29'. It functions to condense (and optionally demist) the desorption carrier gas stream from the second concentrator 110, recirculates a portion back to the second concentrator 110 via stream 80 (which is part of the desorption carrier gas closed loop stream 29'), and sends the remaining portion via stream 91 to decanter 45 for subsequent treatment and dry solvent recovery (e.g., dehydration by distillation) as shown. Inert carrier gas (e.g., nitrogen) make-up may be added to carrier gas desorption loop 29' as necessary. Purified exhaust from the second concentrator 110 exits to stack 70, optionally with a portion being recirculated to the inlet of the first concentrator 10 via recirculation line 71.

Thus in certain embodiments, cooling and regeneration/desorption of the concentrator is carried out using an inert gas (e.g., nitrogen) make-up system. A highly concentrated stream from the outlet of the concentrator 10, 100 flows to condenser 20 to condense at least one contaminant such as a VOC via the desorption carrier gas closed loop stream 29'. The resulting less-concentrated carrier gas stream 80 at the condenser 20 outlet is recycled back to the concentrator 110. The inert gas system provides make-up gas when necessary. In certain embodiments, the condenser 20 includes a housing with a condensing coil with a cooling medium (e.g., chilled water) on the tube side and a demister pad to knock out additional contaminants such as VOC's in the liquid phase. Preferably the condenser housing, coils and demister are constructed using 316L SS material.

The recovered solvent mix may be pumped to a storage tank for downstream dehydration.

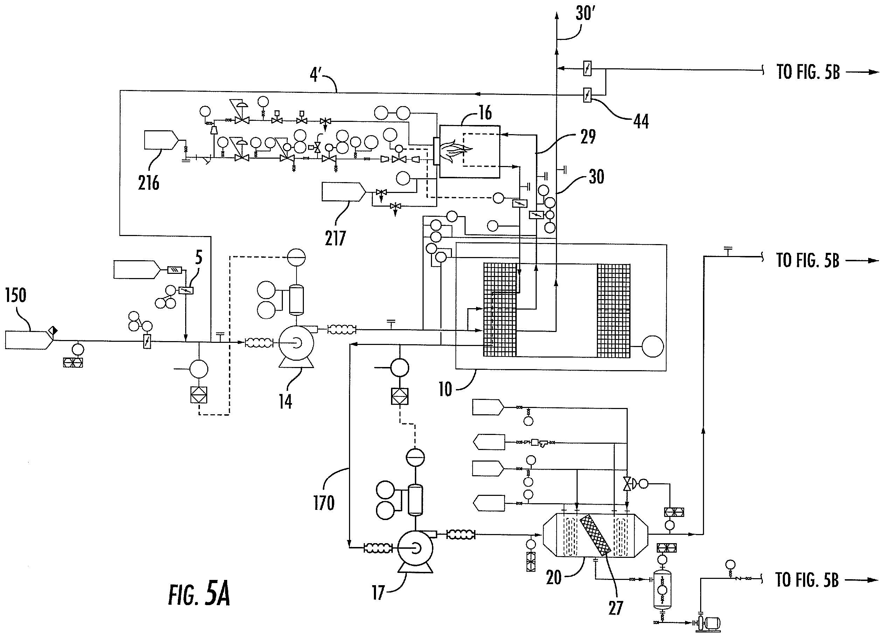

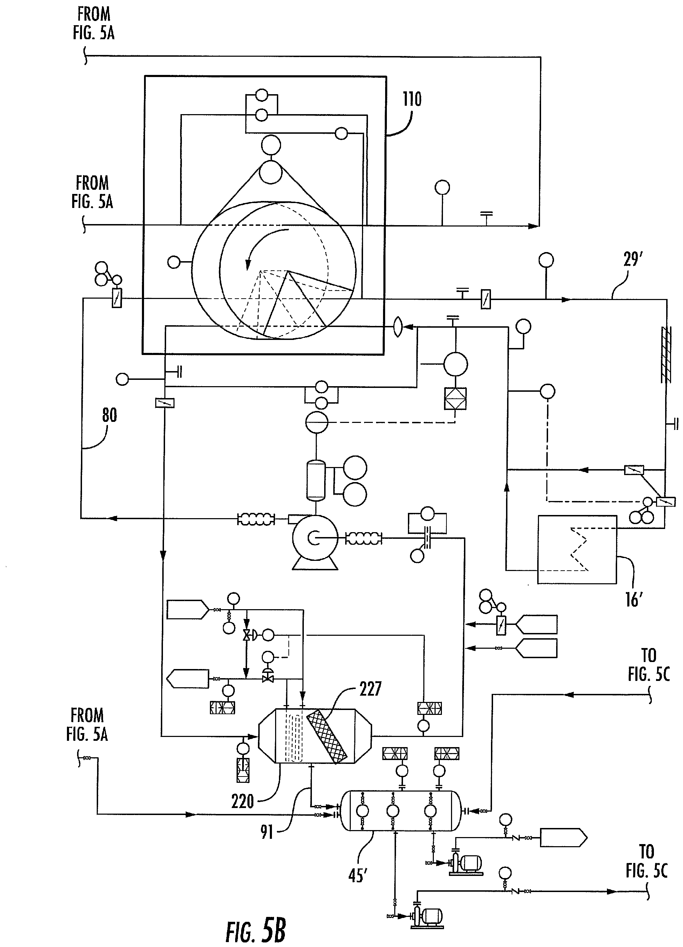

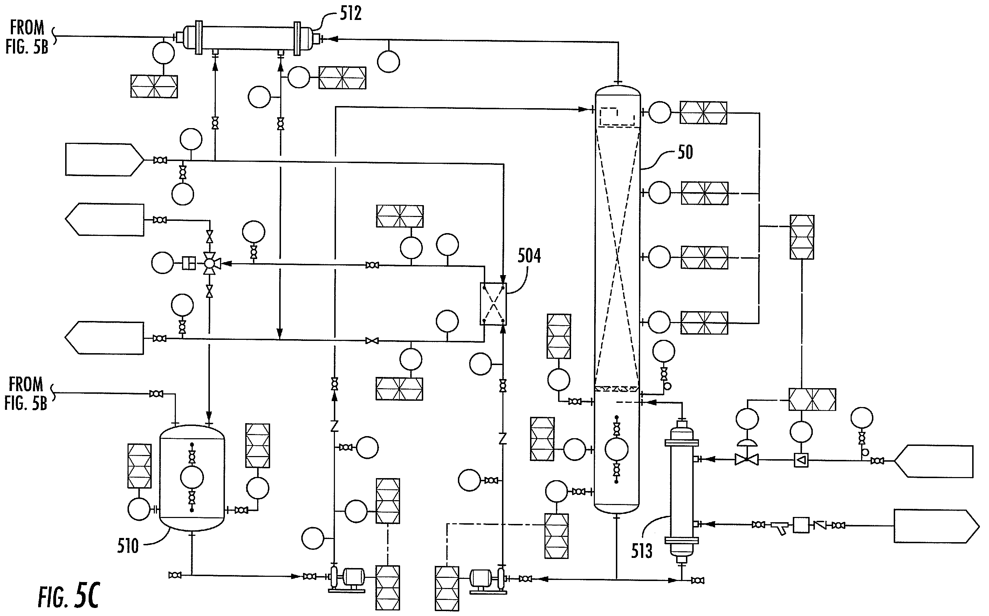

FIGS. 5A, 5B and 5C illustrate schematically yet another embodiment of a contamination recovery system particularly for use with exhaust process gas from a paint spray booth. In the embodiment of FIGS. 5A, 5B and 5C, which is also a double stage system with two concentrators 10, 110 arranged in series, the upstream concentrator 10 is a carousel type rotary concentrator, and the downstream concentrator 110 is a disc-type rotary concentrator. Respective condenser/demisters 20, 220 are associated with each concentrator.

More specifically, contaminant-laden process gas 150 such as the exhaust stream from a paint spray booth is introduced into an upstream or first concentrator 10 with a driving force such as supply fan 14. Fresh air may be added to the process gas inlet stream via suitable valving 5. The process gas inlet stream may include recirculation from the downstream concentrator 110 via recirculation loop 4' suitably regulated with dampers 44a, 44b with a portion being vented to exhaust, along with a portion of purified air 30 from the concentrator 10, as purified air 30'.

Desorption carrier gas closed loop stream 29 may be heated via heat source 16. In certain embodiments, desorption carrier gas may be heated via other alternative heat sources such as an air to air heat exchanger, an indirect burner, thermal oil, etc. In the embodiment shown the heat source 16 is a direct desorption air line burner having a natural gas source 216 as fuel for the burner via a burner gas train and being associated with a suitable compressed air supply 217. The desorption carrier gas closed loop stream 29 is in fluid communication with the concentrator 10 and provides a heated stream to the concentrator 10 to desorb material previously captured by the adsorbent material contained in the concentrator 10 (e.g., filter blocks or the like, not shown), as is known in the art. A portion of the outflow of purified air 30 from the concentrator 10 exits the concentrator 10 and may be sent to an exhaust stack or to a downstream unit operation (not shown). The remaining portion of the outflow of the concentrator 10 is introduced to a dedicated condenser 20 (which may be associated with a demister 27) via stream 170.

Condenser 20 is in fluid communication with a second downstream concentrator 110. In certain embodiments, the second downstream concentrator 110 has its own desorption carrier gas closed loop stream 29', which includes a dedicated second condenser 220 (which may be associated with a dedicated demister 227), and has a dedicated desorption heat source 16' which heats the temperature of the carrier gas in the stream 29' to a temperature effective to desorb contamination adsorbed in the adsorption zone of the concentrator 110.

In certain embodiments, the second condenser 220 condenses (and optionally demists) the desorption carrier gas stream 29' associated with the second concentrator 110 and recirculates it back to the second concentrator 110 via stream 80 (which is part of the desorption carrier gas closed loop stream 29'). The remaining portion is sent via stream 91 to decanter 45' for subsequent treatment and dry solvent recovery (e.g., distillation via column 50 and associated equipment) as shown.

Inert carrier gas (e.g., nitrogen) make-up and fresh air may be added to stream 80, each as necessary. Purified exhaust from the second concentrator 110 exits to exhaust at 30', optionally with a portion being recirculated to the inlet of the first concentrator 10 via line 4'. Again, decanted organic solvent (via decanter 45') may be further purified such as via a distillation system as shown.

Operation of the distillation column may be carried out as follows. The solvent phase from the decanter is introduced into a feed tank 510 where is then pumped to the top of the distillation column 50. The solvent is then properly distributed across the cross-section of the column while slowly making its way down towards the bottom section of the column. Much of the water is vaporized, separated from solvent and travels in the upward direction. The water vapor is collected from the top of the distillation column and is introduced in condenser 512, where is changes its state to liquid water before being introduced to the decanter 45' again. The solvent is collected in the bottom of the distillation column. A reboiler 513 provides the necessary heat such as with steam. The solvent collected at the bottom of the column is then transported using force through a plate and frame heat exchanger 504 which reduces the temperature of the solvent. The dried solvent is then collected as a product for disposal, repurification, cleaning or for reuse in the production process, for example.

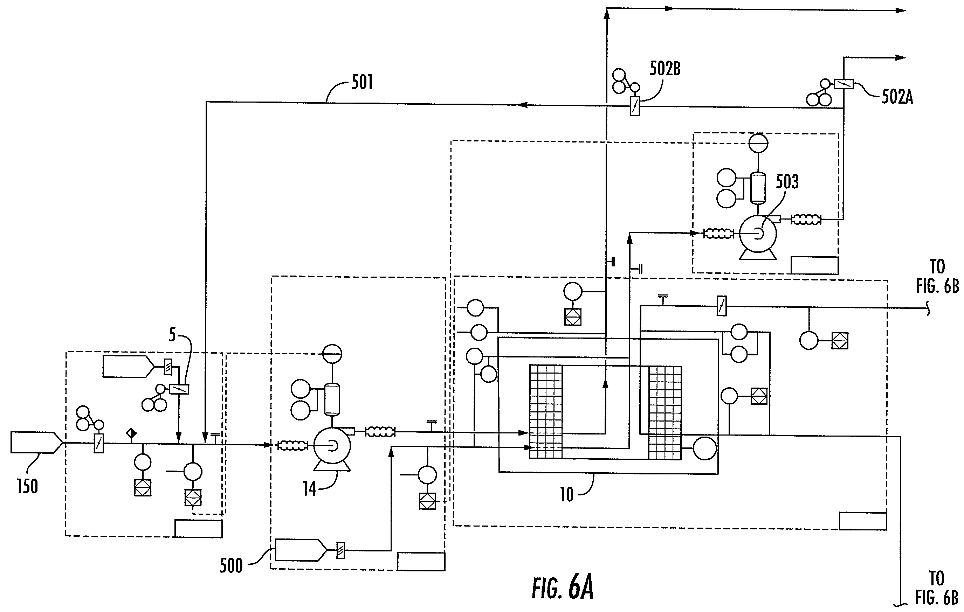

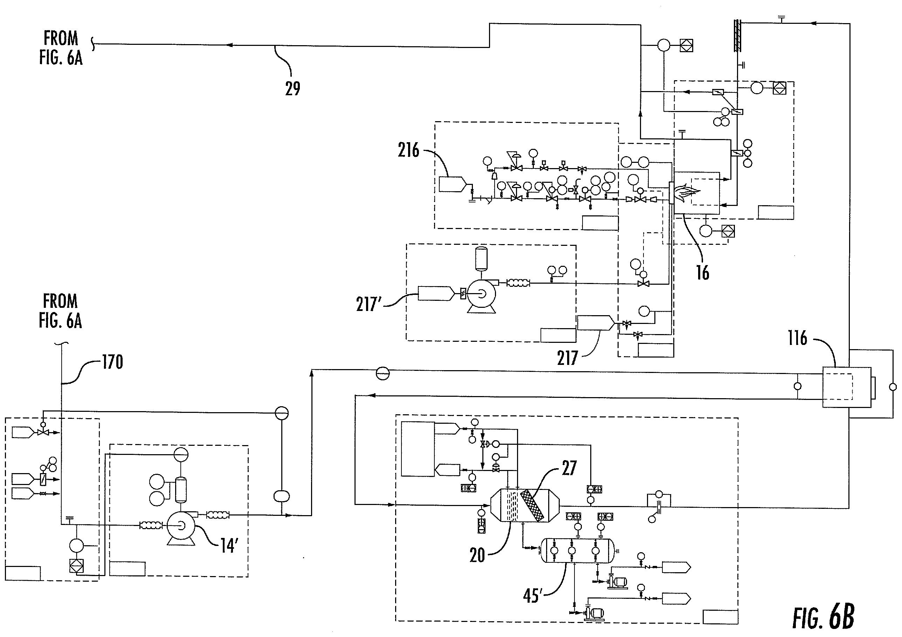

FIGS. 6A and 6B illustrate schematically yet another embodiment of a contamination recovery system, again particularly for use with exhaust process gas from a paint spray booth. In the embodiment of FIGS. 6A and 6B, which is a single stage system with one concentrator 10, the concentrator 10 is a carousel type rotary concentrator. A condenser/demisters 20 is associated with the concentrator 10.

Contaminant-laden process gas 150 such as the exhaust stream from a paint spray booth is introduced into concentrator 10 with a driving force such as supply fan 14. Fresh air may be added to the process gas inlet stream via suitable valving 5. Fresh air flow 500 also may be introduced into concentrator 10 and the fresh air flow exiting the concentrator 10 may be divided, by driving force 503 and suitable balancing dampers 502A, 502B or the like, into exhaust and a recirculation stream 501 introduced into the process gas stream upstream of the concentrator 10.

Desorption carrier gas closed loop stream 29 may be heated via heat source 16 such as an indirect burner. In certain embodiments, desorption carrier gas may be heated via other alternative heat sources such as an air to air heat exchanger, direct burner, thermal oil, etc. In the embodiment shown the heat source 16 is an indirect desorption air line burner having a natural gas source 216 as fuel for the burner via a burner gas train and being associated with a suitable compressed air supply 217 and fresh make-up air flow 217'. The desorption carrier gas closed loop stream 29 is in fluid communication with the concentrator 10 and provides a heated stream to the concentrator 10 to desorb material previously captured by the adsorbent material contained in the concentrator 10 (e.g., filter blocks or the like, not shown), as is known in the art. A portion of the outflow of purified air 30 from the concentrator 10 exits the concentrator 10 and may be sent to an exhaust stack as shown or to a downstream unit operation (not shown). The remaining portion of the outflow of the concentrator 10 is introduced to a dedicated condenser 20 (which may be associated with a demister 27). Thus driving force 14', such as a fan, drives flow into heat recovery heat exchanger 116, and then into condenser 20 as shown. Inert carrier gas (e.g., nitrogen) may be added to stream 170 as shown, manually or automatically. Decanter 45' separates the solvent into a water phase and an organic solvent phase, and the organic solvent may be recovered and re-used and/or further purified.

Various of the operations described herein may include a controller or control system. For any such control system, a suitable controller may be used, such as a controller having a processing unit and a storage element. The processing unit may be a general-purpose computing device such as a microprocessor. Alternatively, it may be a specialized processing device, such as a programmable logic controller (PLC) or a proportional-integral-derivative controller (PID). The storage element may utilize any memory technology, such as RAM, DRAM, ROM, Flash ROM, EEROM, NVRAM, magnetic media, or any other medium suitable to hold computer readable data and instructions. The controller unit may be in electrical communication (e.g., wired, wirelessly) with one or more of the operating units in the system, including one or more valves, actuators, sensors, conveyers, etc. The controller also may be associated with a human machine interface or HMI that displays or otherwise indicates to an operator one or more of the parameters involved in operating the system and/or carrying out the methods described herein. The storage element may contain instructions, which when executed by the processing unit, enable the system to perform the functions described herein. In some embodiments, more than one controller may be used.

While various aspects and embodiments have been disclosed herein, other aspects, embodiments, modifications and alterations will be apparent to those skilled in the art upon reading and understanding the preceding detailed description. The various aspects and embodiments disclosed herein are for purposes of illustration and are not intended to be limiting. It is intended that the present disclosure be construed as including all such aspects, embodiments, modifications and alterations insofar as they come within the scope of the appended claims or the equivalents thereof.

## Claims

1. A contamination recovery system for purifying a process gas containing at least one adsorbable contaminant, comprising:
a first rotary concentrator comprising an adsorption zone having at least one filter element for adsorbing the at least one adsorbable contaminant from a process gas containing the at least one adsorbable contaminant; a desorption zone; a process gas inlet for introduction of said process gas into said first rotary concentrator; a purified gas outlet for venting purified gas from said first rotary concentrator; a desorption carrier gas inlet for receiving a desorption carrier gas in said desorption zone for desorbing the at least one adsorbable contaminant adsorbed by said at least one filter element; and a desorption carrier gas outlet; and
a desorption carrier gas closed loop stream in fluid communication with said desorption zone via said desorption zone inlet and in fluid communication with a condenser and with a heat source for heating carrier gas in said stream to a temperature effective for desorbing said at least one adsorbable contaminant in said desorption zone.

2. The contamination recovery system of claim 1, wherein said carrier gas is an inert gas.

3. The contamination recovery system of claim 1, further comprising a second rotary concentrator upstream of said first rotary concentrator, whereby at least a first portion of concentrated gas exiting said second rotary concentrator is introduced into said process gas inlet of said first rotary concentrator.

4. The contamination recovery system of claim 3, wherein a second portion of concentrated gas from said second rotary concentrator is directed to atmosphere or to a downstream unit operation.

5. The contamination recovery system of claim 3, further comprising a second desorption carrier gas closed loop stream in fluid communication with said second rotary concentrator, said second desorption carrier gas closed loop stream being in fluid communication with a second heat source for heating carrier gas in said second desorption carrier gas closed loop stream to a temperature effective for desorbing said at least one adsorbable contaminant in said second rotary concentrator.

6. The contamination recovery system of claim 5, wherein said carrier gas of said second desorption carrier gas closed loop stream is an inert gas.

7. The contamination recovery system of claim 1, wherein said condenser comprises a condenser outlet for at least one condensed contaminant.

8. The contamination recovery system of claim 7, wherein said condenser outlet is in fluid communication with a decanter.

9. The contamination recovery system of claim 1, further comprising a source of nitrogen make-up gas in fluid communication with said desorption carrier gas closed loop stream.

10. The contamination recovery system of claim 1, wherein said condenser further comprises a demister.

11. The contamination recovery system of claim 1, wherein said desorption carrier gas closed loop stream is in fluid communication with a heat exchanger.

12. The contamination recovery system of claim 3, wherein said first rotary concentrator is a disk rotary concentrator and wherein said second rotary concentrator is a carousel rotary concentrator.

13. The contamination recovery system of claim 3, wherein said condenser comprises a condenser outlet for at least one condensed contaminant.

14. The contamination recovery system of claim 13, wherein said condenser outlet is in fluid communication with a decanter.

15. The contamination recovery system of claim 14, further comprising a distillation column in fluid communication with said decanter.

16. A method of recovering at least one adsorbable contaminant from a process gas containing at least one adsorbable contaminant, said method comprising:
introducing said process gas into a first rotary concentrator having an adsorption zone and a desorption zone;
adsorbing the at least one adsorbable contaminant contained in said process gas in said adsorption zone;
introducing an inert carrier gas into said desorption zone and desorbing said adsorbed at least one contaminant with said inert carrier gas;
condensing said at least one adsorbable contaminant in said inert carrier gas in a condenser;
heating the inert carrier gas exiting said condenser to a temperature effective for desorbing said at least one adsorbable contaminant in said first rotary concentrator and recirculating the heated inert carrier gas to said desorption zone, whereby said inert carrier gas is contained in a closed loop stream; and
exhausting purified gas from said first rotary concentrator.

17. The method of claim 16, wherein the process gas introduced into said first rotary concentrator is first introduced into a second rotary concentrator.

18. The method of claim 17, further comprising introducing a second desorption carrier gas into a second desorption zone of said second rotary concentrator and desorbing adsorbed contaminant in said second desorption zone with said second desorption inert carrier gas.

19. The method of claim 18, further comprising condensing at least one contaminant contained in said second inert carrier gas in a condenser.

20. The method of claim 19, further comprising decanting organic solvent condensed by said condenser.

21. The method of claim 16, further comprising heating said inert carrier gas to a temperature effective for desorbing said at least one adsorbable contaminant in said desorption zone.
